# FASCICULE DE BREVET EUROPEEN

(11) **EP 0 512 882 B1**
(45) Date de publication et mention de la délivrance du brevet: **24.01.1996**
(21) Numéro de dépôt: 92401154.7
(22) Date de dépôt: 23.04.1992
(51) Int. Cl.: H04L 1/20

(54) **Procédé et dispositif de détection et de contrôle du gabarit de messages numériques transmis à un dispositif de réception**
Erkennungsverfahren und Steuerungsanordnung einer zu einem Empfänger gesendeten digitalen Nachrichtenform
Method and device for detection and control of digital message templates transmitted to a reception device

(30) Priorité: 07.05.1991 FR 9105566
(43) Date de publication de la demande: 11.11.1992
(73) Titulaire: SEXTANT AVIONIQUE S.A., F-92366 Meudon la Forêt Cédex (FR)
(72) Inventeur: Pitot, Christian, F-92100 Boulogne (FR); Roussel, Françoise, F-92310 Sevres (FR); Vritz, Louis, F-91140 Villebon Sur Yvette (FR)
(74) Mandataire: de Saint-Palais, Arnaud Marie

(56) Documents cités:
- EP-A- 0 338 881
- GB-A- 2 126 849
- US-A- 4 545 055
- US-A- 4 617 678
- US-A- 4 663 766

## Description

La présente invention concerne un procédé et un dispositif de détection de la vitesse de transmission et de contrôle du gabarit de messages numériques transmis à un dispositif de réception, par une ligne de transmission.

Elle s'applique plus particulièrement à la réception de transmissions numériques de type asynchrone, nécessitant une vérification de la conformité de l'information reçue à un ou plusieurs gabarits de modulation prédéfinis précisant chacun notamment :
- les temps minima et maxima associés à la transmission d'un bit d'information ;
- le rapport cyclique de la modulation ;
- l'intervalle de temps "Gap" entre deux mots ;
- le nombre de bits par mot ;
- la parité du mot.

On sait que des gabarits de ce genre se trouvent définis par des normes telles que, par exemple, la norme ARINC 429 en usage dans l'aéronautique.

Or, il s'avère que cette norme prévoit deux débits de transmission ("basse vitesse" -12,5 kbits, "haute vitesse" 100 kbits), ce qui implique la mise en oeuvre de récepteurs conçus de manière à pouvoir programmer l'une ou l'autre de ces deux valeurs, selon la nature des informations transmises.

Par ailleurs, le brevet US 4 663 766 divulgue un procédé permettant de déterminer le débit de transmission de données échangées entre deux systèmes reliés par une ligne de communication. Ce procédé présente l'inconvénient de nécessiter, préalablement à la transmission de données, un échange de signaux de contrôle entre les deux systèmes de manière à établir un lien de communication à un débit de transmission donné. Il se montre donc peu efficace lorsqu'il s'agit de recevoir des messages très courts provenant de sources différentes, comme c'est le cas dans les applications utilisant la norme ARINC 429.

L'invention a non seulement pour but de résoudre ce problème, mais en outre de permettre de recevoir d'autres types de modulations non décrits dans la norme précitée sans altérer la sécurité des applications pour lesquelles la conformité à la norme est requise.

Pour parvenir à ce résultat, l'invention propose un procédé de contrôle comprenant une étape de codage préalable d'un nombre déterminé de gabarits possibles définis par des contraintes portant sur un ensemble limité de paramètres comprenant :
- les temps minima et maxima associés à la transmission d'un bit d'information,
- le rapport cyclique de la modulation,
- l'intervalle de temps "Gap" entre deux mots,
- le nombre de bits par mot, et
- la parité du mot;
ledit procédé comprenant, lors de la réception de chacun des mots :
. une première étape de détection des susdits paramètres dans le mot en cours de réception, et de détermination, parmi les gabarits mémorisés, de celui qui correspond aux paramètres détectés ;
. une deuxième étape de vérification de la conformité du mot reçu avec le gabarit déterminé ; et
. le retour à la première étape dans le cas où cette vérification révèle une non conformité entre le gabarit détecté et le mot en cours de réception.

Dans le cas où elle aboutit, la phase de détection se termine dès l'attribution de l'information du type de gabarit.

Bien entendu, le procédé selon l'invention pourra en outre comprendre le rejet des informations non fiables, c'est-à-dire les informations qui, durant leur transmission, n'auront pas satisfait à toutes les contraintes d'un même et unique gabarit parmi tous les gabarits possibles.

A ce processus de contrôle pourra être rajouté une séquence de tri portant sur un critère de sélection qui fait partie intégrante de l'information transmise et qui, de préférence, se trouve en tête de celle-ci, cette séquence de tri pouvant comprendre :
- la scrutation cyclique, à fréquence fixe, d'une liste de conditions programmées et mises en mémoire ;
- l'acquisition de l'information transmise sur la ligne ;
- l'activation d'un processus de sélection lorsque le critère de sélection de l'information a été acquis, ce processus de sélection comportant une étape de synchronisation d'attente du passage du processus de scrutation par la position de début de la liste de conditions, et une séquence de comparaison de l'information de sélection contenue dans l'information en cours de réception, et l'élaboration d'une variable de sélection qui indique si le message en cours de réception intéresse ou non le récepteur, la fin du processus de sélection étant obtenue soit par l'épuisement de toutes les conditions de la liste et le retour vers la condition de début de liste, soit par la lecture d'un code spécial dit code de fin de liste ;
- la mémorisation des informations sélectionnées dans une mémoire tampon accessible par le système hote.

Avantageusement, le dispositif pour la mise en oeuvre du procédé précédemment décrit pourra se présenter sous la forme d'une unité d'interface d'entrée/sortie hautement intégrée entre une unité locale à microprocesseur et une ou plusieurs lignes de transmission de type série sur lesquelles circulent des informations conformes à la norme ARINC qui se présentent sous la forme d'une succession de mots de 32 bits engendrés conformément aux gabarits de modulation précédemment évoqués et comprenant chacun, successivement :
- un premier nombre de huit bits (de 0 à 7) définissant une étiquette ou "label" ;
- un second nombre de deux bits (8 et 9) servant à identifier la source ou la destination du mot (SDI) ;
- un troisième nombre de vingt et un bits (10 à 30) contenant les données à transmettre ; et
- un bit de parité (bit 31).

Un mode d'exécution de cette unité d'interface sera décrit ci-après, à titre d'exemple non limitatif, avec référence aux dessins annexés dans lesquels :
La figure 1 est un schéma théorique illustrant le mode de branchement d'un interface selon l'invention entre un processeur et deux paires de voies de transmission (deux voies d'émission et deux voies de réception) ;
La figure 2 est un schéma synoptique de l'interface représenté figure 1 ;
La figure 3 est un diagramme temporel montrant les signaux émis sur les voies de transmission selon un codage de type "à modulation différentielle sur deux fils" ;
La figure 4 est un diagramme temporel montrant l'enveloppe de signaux du type de ceux représentés figure 3 ;
La figure 5 est un schéma synoptique du bloc de réception de l'interface représenté figure 2 (pour une voie) ;
La figure 6 est un schéma synoptique permettant d'illustrer la génération à n voies de la figure 1.

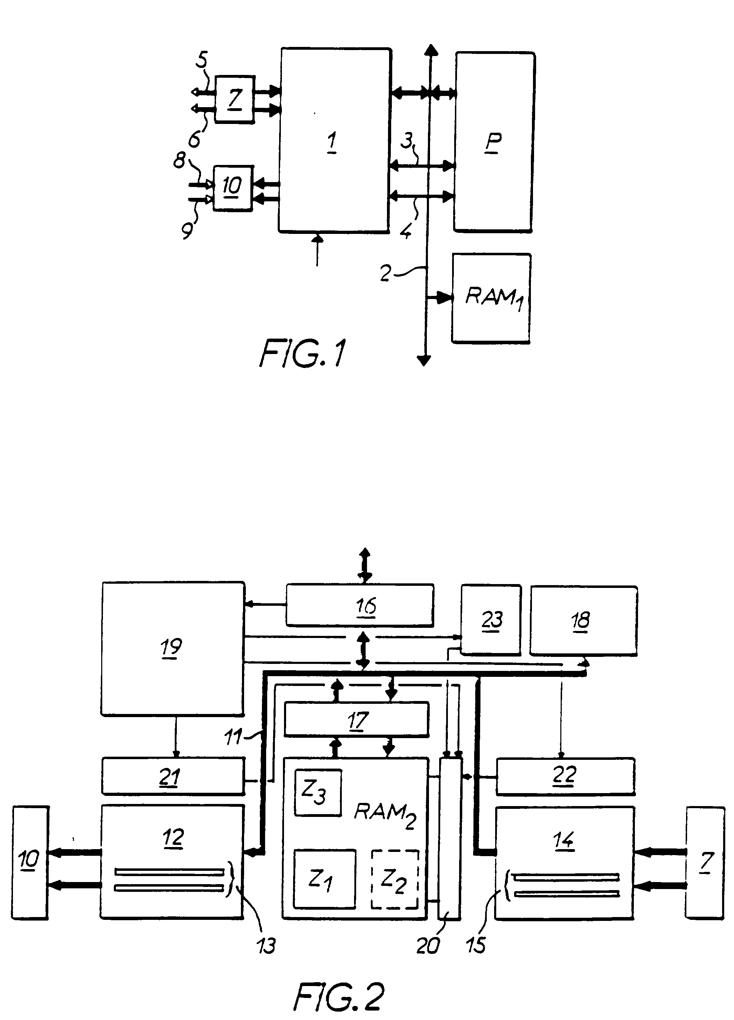

Dans l'exemple représenté sur la figure 1, l'interface d'entrée/sortie selon l'invention qui est représenté par un bloc 1, est connecté, d'une part, à une unité locale à microprocesseur P associé à une mémoire vive RAM₁ par l'intermédiaire d'un bus de données 2, de contrôle 3 et d'adressage 4 et, d'autre part, à deux voies 5, 6 de réception d'informations conformes à la norme ARINC 429, par l'intermédiaire d'un démodulateur 7 et à deux voies 8, 9 d'émission d'informations par l'intermédiaire d'un modulateur de ligne 10.

Cet interface d'entrée/sortie 1 fait intervenir, connectés par un bus interne 11 :
- un bloc d'émission 12 connecté au modulateur 10 et utilisant une mémoire tampon formée de deux registres 13 de 16 bits permettant de stocker le demi-mot en cours d'émission sur chacune des voies ; ces tampons constituent un prolongement de la zone mémoire Z₁ décrite ci-après et dans laquelle les mots sont organisés en file d'attente ;
- un bloc de réception 14 connecté au démodulateur 7 et utilisant une mémoire tampon formée de deux registres 15 de 16 bits permettant d'accumuler les bits des demi-mots ARINC reçus sur chacune des deux voies avant leur transfert dans la zone mémoire Z2 décrite ci-après ;
- un interface de liaison 16 (16 bits) avec l'unité locale à microprocesseur P ;
- une mémoire vive RAM2 associée à un circuit de gestion des données 17, cette mémoire vive RAM2 pouvant constituer le prolongement des deux mémoires tampon 13, 15 ;
- un dispositif de reconnaissance de messages "pattern matching" 18 recherchant les coïncidence entre les critères de sélection des mots en cours de réception sur les deux voies et les codes dits codes de piège à "labels" stockés dans la zone Z3 de la RAM2, ces codes sont présentés séquentiellement au dispositif de reconnaissance des messages par le pointeur de pièges à "labels" 23 ;
- un automate 19 servant à piloter un générateur d'adresse 20 associé à la mémoire RAM2 par l'intermédiaire d'un pointeur d'émission 21, d'un pointeur de réception 22, et d'un pointeur de piège à "labels" 23.

L'émission de mots ARINC sur les deux voies 8, 9 peut s'effectuer à des fréquences programmables, par exemple de 12,5, 100 et 1000 kHz.

Les mots à émettre sont formatés et chargés par le processeur P dans une mémoire (par exemple une zone de la RAM2). Pour chaque voie, le générateur de la parité et du gabarit, le séquencement de l'émission et la sérialisation sont assurés en interne.

Les mots ARINC à émettre sont fournis par le processeur P et stockés dans la zone mémoire Zl de la RAM2 avant leur sérialisation.

Cette zone mémoire Z₁ est gérée à la façon d'une pile FIFO, avec allocation dynamique, afin d'optimiser son occupation en fonction de la vitesse programmée pour chacune des deux voies 8, 9, et sa capacité est de 32 mots ARINC pour l'ensemble des deux voies.

Le chargement d'un mot ARINC (32 bits) dans la zone mémoire Z₁ sera déclenché par l'unité locale et s'effectuera en deux temps successifs : transfert des 16 bits de poids faible puis des 16 bits de poids forts. La sérialisation effectuée d'un mot ARINC sur une voie 8, 9 désirée ne peut alors s'effectuer que lorsque :
- ses demi-mots ont été chargés par l'unité locale (processeur P) dans la zone mémoire Z₁ ;
- l'ensemble des mots précédemment transmis vers cette voie ont été totalement émis.

Le 32ème bit du mot ARINC qui définit la parité du mot est calculé en interne.

La fréquence d'émission est définie par un mot de programmation émis par l'unité locale (processeur P).

L'émission débute sur une voie dès qu'un mot complet a été chargé dans une paire de mots de 16 bits d'adresses consécutives alloulée en zone Z₁ à la voie considérée par le dispositif d'allocation dynamique contenu dans le pointeur d'émission 21.

La réception des mots ARINC provenant des voies 5, 6 s'effectue comme suit :
Chaque mot reçu ayant satisfait aux contrôles demandés dans un mot de programmation et possédant une information de sélection (qui comprend ici l'ensemble "label"-SDI-voie) identifié par le dispositif de reconnaissance des messages, est mis en mémoire après substitution de son 32^{ème} bit de parité par le numéro de voie sur lequel il est arrivé dans une zone Z₂ de la mémoire RAM₂ gérée en pile FIFO de capacité de 64 mots ARINC.

La restitution complète d'un mot ARINC ainsi stocké sera déclenchée par le processeur P et nécessite deux phases de lecture successive de cette dernière, à savoir :
- une phase de lecture des 16 bits de poids faible pf ;
- une phase de lecture des 16 bits de poids forts PF.

Lorsque la zone de mémoire Z₂ gérée en pile FIFO est vide, les deux lectures déclenchées par l'unité centrale se concluront par la restitution d'un code spécial, par exemple 0000 h.

Comme précédemment mentionné, avant de pouvoir être transféré dans la zone de mémoire Z₂, le mot en cours de réception subit un certain nombre de contrôles dont la nature est programmable dans le mot de programmation.

Les anomalies pouvant conduire au rejet de ce mot sont par exemple les suivantes :
- rapport cyclique hors norme (non compris dans une fourchette de valeur prédéterminée) ;
- vitesse non homogène (si tous les bits ne sont pas reçus à la même vitesse) ;
- vitesse hors gabarit ;
- défaut de "gap" (si la durée de l'intervalle qui sépare du début du mot suivant est inférieure à une valeur déterminée) ;
- réception simultanée d'un état logique haut sur les deux broches H et L d'une même voie ARINC ;
- défaut de parité (par exemple la parité d'un mot n'est pas impaire à l'issue de la réception de ses 32 bits).

Dans cet exemple, chacune des voies est de type bifilaire (fils H et L) et la modulation effectuée par les modulateurs est de type différentiel.

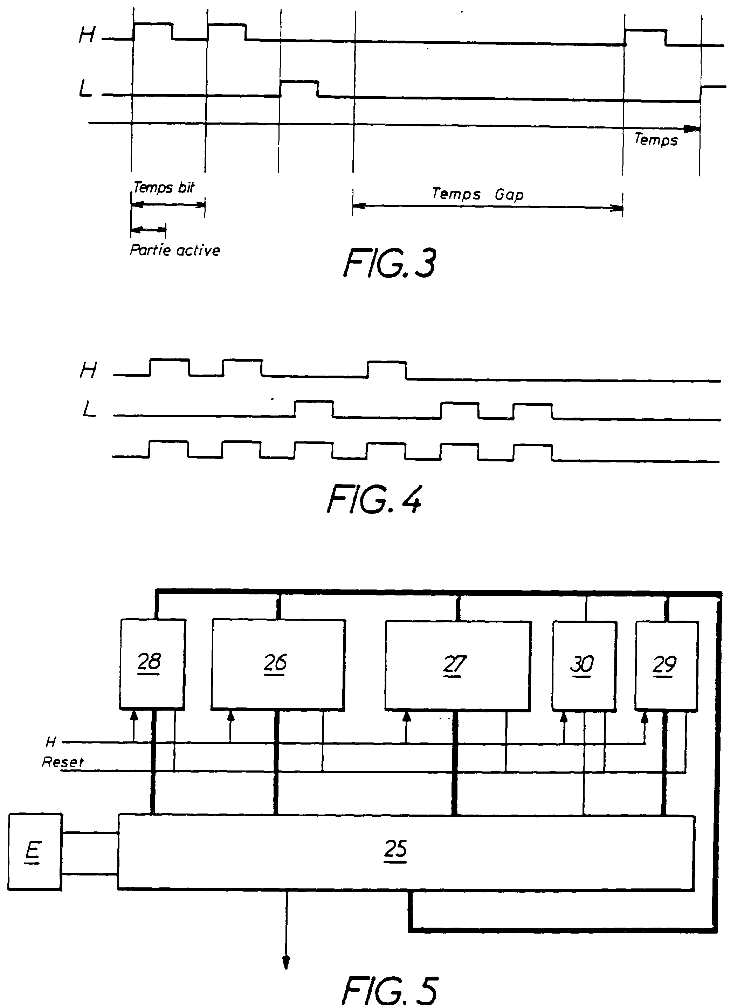

Ce type de modulation est illustré sur la figure 3 dans laquelle on a représenté dans le temps des signaux émis sur les fils H et L, correspondant à la fin d'un mot ARINC et le début du mot suivant, après un espace sans modulation ("Gap").

En fait, les gabarits définis dans la norme ARINC 429 pour ce type de modulation concernent les grandeurs suivantes indiquées sur la figure 3 :
- "temps bit" : temps minima et maxima associés à la transmission d'un bit d'information,
- rapport cyclique de la modulation : assimilable aux temps min et max associés à la partie active de la transmission d'un bit,
- temps "Gap" minimum : espace sans modulation séparant au minimum deux trains de bits constituant un mot,
- le nombre de bits par mot,
- la parité d'un mot.

Pour effectuer le contrôle de ces gabarits, l'invention propose d'utiliser l'enveloppe de la modulation, c'est-à-dire un signal E (figure 4) obtenu en réalisant la fonction logique "OU" entre les signaux émis sur les fils H et L.

Comme illustré sur la figure 5, le dispositif de contrôle de gabarit utilisé par le bloc de réception fait intervenir un échantillonneur E qui procède à un échantillonnage de l'enveloppe, c'est-à-dire qu'avec une certaine périodicité (période très courte par rapport à la période des bits), il va lire la valeur de l'enveloppe et mémoriser cette valeur.

Bien entendu, ces échantillons auront successivement les valeurs 0 et 1 suivant qu'au moment où ils ont été prélevés, l'enveloppe présentait une valeur 0 ou une valeur 1. On considère qu'il y a un "événement" chaque fois que la valeur d'un échantillon diffère de la valeur de l'échantillon précédent prélevé sur la même voie. On distingue deux types d'événements :
a) le "front montant" qui correspond à une succession de deux échantillons présentant les valeurs 0 puis 1,
b) le "front descendant" qui correspond à la succession de deux échantillons présentant les valeurs 1 puis 0.

Les échantillons prélevés par l'échantillonneur contribuent par l'intermédiaire d'un circuit de logique combinatoire 25 à la mise à jour d'un système de comptage qui comprend deux compteurs, à savoir :
. un compteur de temps bit 26 d'une capacité au moins égale au nombre maximum d'échantillons susceptibles d'être dénombrés entre le front montant du dernier bit d'un mot transmis à la vitesse correspondant au gabarit le plus lent et l'instant au bout duquel un "Gap" minimum s'est écoulé, et
. un compteur de bits 27 d'une capacité au moins égale à la longueur du mot, ce compteur effectuant par exemple le comptage des fronts (montant ou descendant) de l'enveloppe, depuis le début d'un mot.

Au cours de la réception d'un mot, à chaque échantillon prélevé par l'échantillonneur, le circuit de logique combinatoire 25 établit un "contexte" correspondant à la voie en cours de réception, ce contexte comprenant :
. la valeur de l'échantillon précédent (1 bit), mémorisée dans un registre 28,
. le relevé du compteur de temps bit 26,
. le relevé du compteur de bits 27,
. le code du gabarit détecté stocké dans-un registre 29 présentant un nombre de bits suffisant pour contenir l'ensemble des codes de gabarit susceptibles d'être reçus,
. la parité courante (contenue dans un registre 30 de 1 bit),
. l'information "Gap détecté" contenue dans un registre et fournie par un détecteur de "Gap" pouvant consister en un système de décodage de la valeur "0" du compteur de bits 27.

Avantageusement, le compteur de temps bits 26 et le compteur de bits 27 seront mis en série de manière à obtenir la dynamique nécessaire au décomptage du "Gap", une fois le dernier bit du mot reçu.

Initialement, les compteurs 26, 27 sont à zéro, l'échantillon précédent stocké dans le registre 28 vaut zéro, le code gabarit (registre 29) est indifférent (il pourra par exemple être composé de bits de valeur 0, en prenant soin de vérifier que cette valeur ne correspond à aucun code de gabarit), la parité (registre 30) est à 0, tandis que le bit de "Gap" détecté est à 1.

A partir de cet état initial qui peut être obtenu par une initialisation de l'interface, le contexte évolue à chaque échantillon, conformément aux règles indiquées ci-après :

1) Dans le cas où le comptage des bits 27 est à 0 (le bit de "gap" détecté étant à 1), le contexte ne peut évoluer que selon un événement de type "front montant". Dans ce cas, cet événement provoque :
1. une incrémentation du compteur de bit 27,
2. une remise à zéro (par défaut) du compteur d'échantillon,
3. l'initialisation de la parité courante, par la valeur 0 ou 1 du bit en cours de réception.

Si il ne se produit pas d'événement ou si l'événement est un front descendant, aucune action n'est provoquée.

2) Dans le cas où le compteur de bits 27 est à 1 :

Chaque échantillon (sauf dans le cas où il se produit un événement de type "front montant") provoque une incrémentation du compteur de temps bit 26.

Dans le cas où il se produit un événement de type "front montant", le système :
- effectue une détection du code gabarit à partir de la valeur du compteur de temps bit 26 et mémorise ce code dans le registre de code gabarit 29,
- effectue une incrémentation du compteur de bits 27,
- provoque la remise à zéro du compteur de temps bit 26,
- met à jour la parité.

Cette remise à jour permet de clore la phase de détection et de mémorisation du gabarit de l'information en cours de réception.

3) Si le compteur de bits 27 relève un chiffre compris entre 1 et la valeur du nombre de bits attendus pour un mot exclus :
chaque échantillon provoquera une incrémentation du compteur de temps bit 26 (sauf dans le cas d'un événement de type front montant).

Dans le cas où survient un événement de type "front descendant" :
le système vérifie la valeur courante du compteur de temps bit 26 par rapport aux limites min et max de la durée de la partie active du bit :
. si la valeur courante est comprise dans les limites précitées, le système n'engendre pas d'action particulière,
. si la valeur courante est en dehors des limites précitées, le système émet un signal d'erreur.

Dans le cas où survient un événement "front montant", cet événement provoque :
- une incrémentation du compteur de bit 27 :
- une vérification de la valeur courante du compteur de temps bit 26 par rapport aux limites min et max du temps bit (en fonction du code gabarit actif) :
   . si la valeur courante est comprise dans les limites : pas d'actions particulières ;
   . si la valeur courante est en dehors des limites : transmission d'un signal d'erreur ;
- une remise à zéro du compteur de temps bit 26 ;
- une mise à jour de la parité.

4) Si le compteur de bits 27 relève un chiffre correspondant à la valeur du nombre de bits attendus pour un mot, tous les événements, sauf "front montant", provoquent :
- une vérification de la parité :
   . si la parité est correcte : pas d'action particulière ;
   . si la parité est incorrecte : émission d'un signal d'erreur ;
- une attente de la valeur prévue pour la valeur de "Gap" minimum en fonction du type de gabarit détecté :
   . si le compteur de temps bit 26 détecte une valeur différente de la valeur de "Gap" minimum, le système n'effectue pas d'action particulière ;
   . si le compteur de temps bit 26 relève une valeur égale à la valeur de "Gap" minimum, le système émet un signal de fin de mot correct ;
- une incrémentation du compteur de temps bits 26.

Dans le cas où il se produit un événement de type "front descendant", cet événement provoquera en outre la vérification de la valeur courante du compteur de temps bit 26 par rapport aux limites minimum et maximum de la durée de la partie active :
. si la valeur courante est dans les limites : pas d'action particulière,
. si la valeur courante est en dehors des limites : le système émet alors un signal d'erreur.

5) Autres vérifications liées au gabarit qui sont menées en parallèle :
. si le compteur de bit 27 relève une valeur différente de 1, le système vérifie qu'il n'atteint jamais une valeur maximale supérieure au temps minimum de "Gap" détecté,
. on vérifie également que lorsqu'il atteint la valeur maximum correspondant à la durée de temps actif du bit, la valeur de l'échantillon courant est 0,
. si l'une ou l'autre de ces deux conditions n'est pas respectée, le système transmet un signal d'erreur, un tel signal d'erreur sera également émis dans le cas où lors d'un échantillonnage quelconque, les signaux présents sur les lignes H et L sont tous deux égaux à 1.

Dans tous les cas, le signal d'erreur provoquera les actions suivantes :
- mise à jour du vecteur d'erreur (s'il en existe un),
- remise à zéro du compteur de bits 27 ("Gap" détecté à 1),
- remise à zéro du compteur d'échantillon 26 (temps bit),
- remise à zéro de la parité.

Le signal "fin de mot correct" provoquera, quant à lui, les actions suivantes :
- remise à zéro du compteur de bit 27 ("Gap" détecté à 1),
- remise à zéro du compteur d'échantillon 26 (temps bit),
- remise à zéro de la parité,
- transmission aux dispositifs situés en aval d'un signal indiquant qu'un mot correct est disponible (sortie 31).

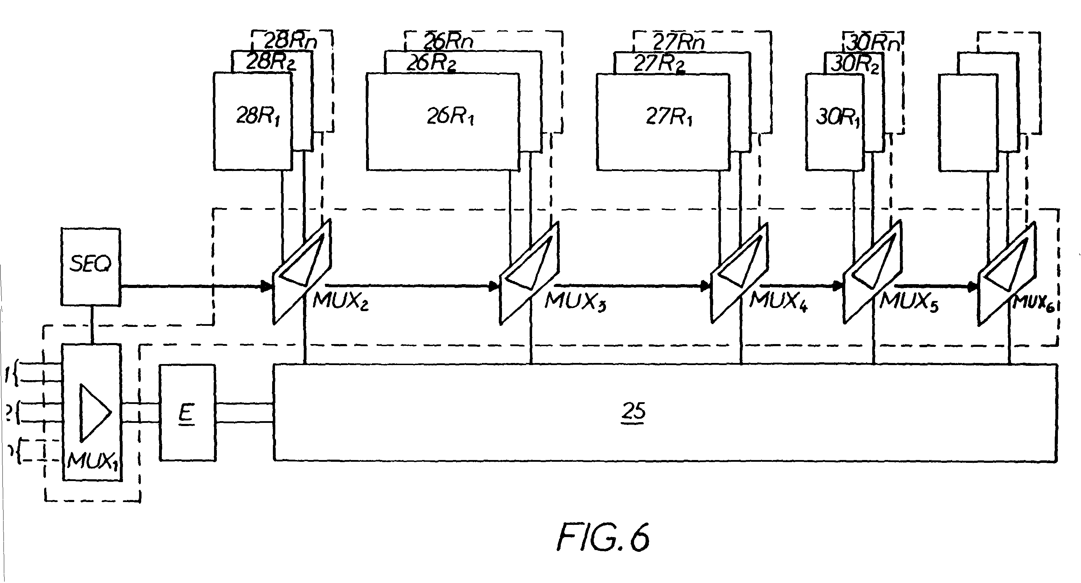

Comme précédemment mentionné, le dispositif illustré sur la figure 5 peut être généralisé à n voies de la façon indiquée sur la figure 6.

Dans cet exemple, les n voies de transmission sont séquentiellement connectées à l'entrée de l'échantillonneur E, par l'intermédiaire d'un multiplexeur MUX₁ piloté par un séquenceur SEQ.

Le dispositif fait alors intervenir cinq ensembles de registres, à savoir :
- un premier ensemble de n compteurs de temps bit 26 R₁, 26 R₂, 26 Rₙ,
- un second ensemble de n compteurs de bits 27 R₁, 27 R₂, 27 Rₙ,
- un troisième ensemble de n registres de mémorisation de la valeur de l'échantillon précédent 28 R₁, 28 R₂, 28 Rₙ,
- un quatrième ensemble de n registres de stockage du code gabarit 29 R₁, 29 R₂, 29 Rₙ, et
- un cinquième ensemble de n registres de parité courante 30 R₁, 30 R₂, 30 Rₙ.

Chacun de ces cinq ensembles est connecté au circuit de logique combinatoire 25 par l'intermédiaire d'un multiplexeur respectif MUX₂ à MUX₆, piloté par le séquenceur SEQ en synchronisme avec le multiplexeur MUX₁.

Cette solution présente l'avantage de n'utiliser qu'un seul circuit de logique combinatoire et qu'un seul échantillonneur E, les multiplexeurs MUX₁ à MUX₆ pouvant faire partie d'un même système de multiplexage. Avantageusement, on remarquera que la partie combinatoire des compteurs 26 et 27 peut être assimilée à la logique combinatoire 25, ce qui permettra de ne pas la dupliquer n fois.

Le dispositif de reconnaissance de l'information de sélection contenue dans les messages assure deux fonctions distinctes :
1) Il permet de sélectionner les mots ARINC qui devront être réceptionnés dans la zone mémoire Z₂ (grâce aux informations contenues par les ensembles "Label"-SDI-VOIE qui caractérisent chacun d'eux).
2) Il permet l'émission d'interruptions vers l'unité locale (processeur P) lors de la réception de mots ARINC comprenant des ensembles "Label"-SDI-VOIE remarquables.

Les deux fonctions sont réalisées en effectuant une comparaison séquentielle de l'ensemble "Label"-SDI-VOIE de chaque mot nouvellement reçu avec l'ensemble des codes contenus dans une table interne : les pièges à "labels".

Cette table est physiquement réalisée par une zone Z₃ de la mémoire RAM₂ et peut par exemple présenter une capacité de stockage de 64 mots de 16 bits chacun.

Elle devra être séquentiellement préchargée par l'unité locale (processeur P) après l'initialisation de l'interface 1 dans le mode alors présent prévu à cet effet.

Le processus de scrutation des codes contenus dans la table est un processus par exemple d'une durée de 128 périodes d'horloge de base du circuit et permettant de lire successivement les 64 positions de la liste. Il est activé automatiquement par la réception du 10^{ème} bit du mot ARINC en cours de réception. La synchronisation de ce processus de sélection s'effectue lors du passage du pointeur de liste à l'adresse zéro de la liste de conditions qui synchronise la tâche de sélection et la tâche de scrutation du piège à "labels".

On considère qu'il y a identité entre l'ensemble "Label"-SDI-VOIE d'un mot nouvellement reçu et un des pièges à "labels" programmés par l'unité locale si les trois conditions suivantes sont respectées :
1) Les "labels" reçu et programmé sont identiques, ou ne diffèrent que par des bits pour lesquels un masquage a été défini.
2) Les SDI reçu et programmé sont identiques ou sont soumis à un masquage.
3) Les numéros de voie reçu et programmé sont identiques ou sont soumis à un masquage.

Le dispositif de reconnaissance précédemment décrit a pour objet d'élaborer une variable de sélection de laquelle dépendra le maintien ou le rejet du mot.

Bien entendu, au moment de la synchronisation du processus de scrutation de la liste de conditions, la variable de sélection est à zéro. A partir de cet instant, à chaque lecture d'une condition nouvelle de la liste et ce, jusqu'à épuisement de celle-ci (ou la lecture d'un mot de fin de liste), la valeur de la variable de sélection va être réévaluée en appliquant les règles indiquées par la suite qui dépendent de la nature des codes utilisés.

Dans cet exemple, les codes définissables par l'unité locale peuvent être de trois types différents :
- les bases,
- les altérations de base,
- le mot de fin de liste.

Une base est un mot binaire de 16 bits dans lequel :
- les bits de 0 à 7 correspondent au "label" programmé qui est comparé au "label" reçu ;
- les bits 8 et 9 correspondent au SDI programmé qui est comparé au SDI reçu ;
- le bit 10 correspond au numéro de voie programmé qui est comparé au numéro de voie reçu ;
- le bit 11 caractérise le fait que le code actuel est une base ;
- le bit 12 permet le masquage de la comparaison entre les SDI ;
- le bit 13 permet le masquage de la comparaison entre les numéros de voie ;
- le bit 14 permet, si l'identité est établie avec le code actuel, d'annuler l'effet d'une identité précédemment établie avec un autre code (inversion de condition) ;
- le bit 15 permet de considérer l'ensemble "Label"-SDI-Voie associé au mot ARINC en cours de réception comme "remarquable" si le code actuel parvient à établir l'identité.

Une altération de base est un mot binaire de 16 bits dans lequel :
- les bits de 0 à 7 qui correspondent au "label", permettent le masquage de la comparaison entre certains bits des "labels" et les bits de même position de la base ainsi altérée ;
- les bits 8 à 10 sont des bits devant être forcés à zéro ;
- le bit 11 caractérise le fait que le code actuel est une altération de base (les caractéristiques de la base à laquelle cette altération est associée étant conservées) ;
- les bits 12 à 15 sont des bits devant être forcés à zéro.

Le mot de fin de liste est un mot binaire de 16 bits qui permet de spécifier l'extrémité de la table de pièges à labels lorsque celle-ci ne nécessite pas d'être programmée dans son intégralité.

Les codes prenant place à la suite de ce mot de fin de liste, ne pourront donc pas participer à l'analyse de l'identité de l'ensemble "Label"-SDI-Voie associé au mot ARINC en cours de réception. Sa valeur caractéristique est, par exemple, FF00 h (huit premiers bits à 1, huit derniers bits à 0).

Les exemples figurant ci-après permettront de mieux comprendre le principe de la programmation effectué par les codes de programmation de la table, qu'il s'agisse de base, d'altération de base ou d'une fin de liste.

### Exemple No 1

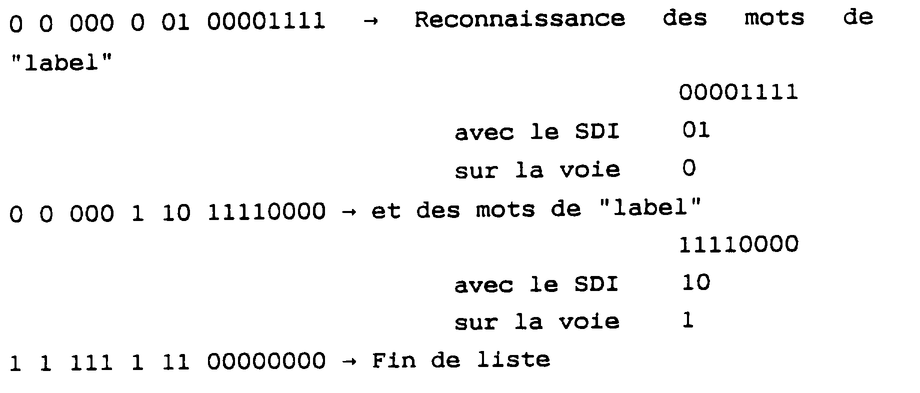

### Exemple No 2

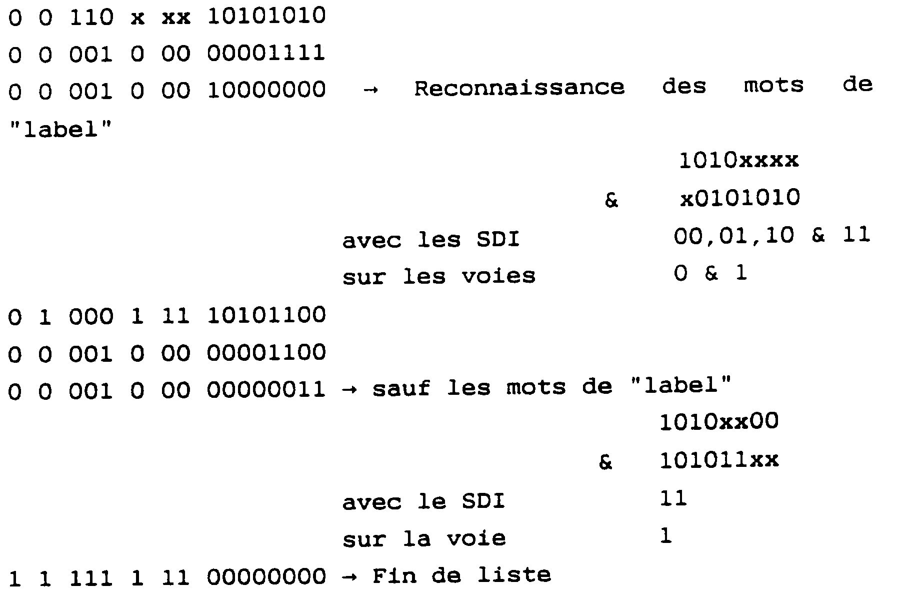

### Exemple No 3

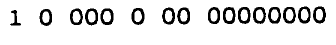

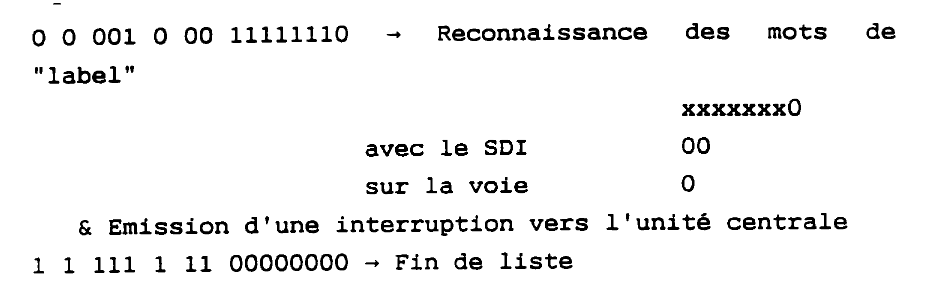

Compte tenu de ce qui précède, la valeur de la variable de sélection sera déterminée en appliquant les règles suivantes :
a) Dans le cas où la condition est une base, et où les valeurs N° Voie/SDI/"label" qui caractérisent le mot en cours de réception coïncident avec le code de base :
   . Si le bit d'inversion vaut 0, la variable de sélection est mise à 1,
   . Si le bit d'inversion vaut 1, la variable de sélection est mise à 0.
   Dans les autres cas, la variable de sélection est inchangée.
b) Dans le cas où la condition est une altération de base et où les valeurs N° Voie/SDI/"label" qui caractérisent le mot en cours de réception coïncident avec le code de la précédente base reçue modifiée dans le sens d'un élargissement de la condition par l'intermédiaire des positions indifférentes apportées par l'altération de base en cours :
   . Si le bit d'inversion vaut 0, la variable de sélection est mise à 1,
   . Si le bit d'inversion vaut 1, la variable de sélection est mise à 0.
c) Dans le cas où la condition est une fin de liste :
   . La valeur de la variable de sélection est la valeur définitive.

Comme précédemment mentionné, la séquence de contrôles effectués sur les mots ARINC en cours de réception est définie par programme (mot de programmation) et donne lieu à un mot d'état de 16 bits qui permet d'informer l'unité locale aussi bien sur l'état dans lequel se trouve l'interface que sur les caractéristiques des transmissions effectuées. Ce mot d'état est un mot de 16 bits dans lequel :
- les bits 0 et 1 désignent la vitesse d'émission des mots ARINC sur la première voie (trois vitesses possibles) ;
- les bits 2 et 3 désignent la vitesse d'émission des mots ARINC sur la deuxième voie ;
- les bits 4 et 5 définissent le mode de fonctionnement :
   00 - application
   01 - pièges à "labels"
   10 - test RAM réception
   11 - test RAM émission
- les bits 6 à 9 assurent une validation d'interruption lorsque :
   - la pile FIFO d'émission devient vide (bit 6),
   - la pile FIFO de réception devient vide (bit 7),
   - la pile FIFO d'émission déborde (bit 8),
   - la pile FIFO de réception déborde (bit 9).

Lorsqu'une anomalie dont le contrôle a été programmé dans le mot de programmation est détectée sur l'une des deux voies, il y a alors mise à jour du mot d'état, par ajout de l'indicateur caractéristique de cette anomalie.

Lors d'une remise à zéro, tous les contrôles en réception sont invalidés (bits 10 à 15), toutes les interruptions demandées par les piles FIFO sont invalidées (bits 6 à 9), le mode de fonctionnement (bits 4 et 5) est placé sur "piège à labels", et les émissions sur les deux voies sont inhibées (bits 32 et 10 respectivement égaux à 0).

La gestion des interruptions s'effectue grâce à un vecteur d'interruption que l'unité de calcul vient lire quant elle reçoit une interruption, de manière à connaître la raison de cette interruption.

Ce vecteur d'interruption consiste en un mot de 16 bits dans lequel :
- les bits 15 à 9 définissent le nombre de mots ARINC stockés dans la pile FIFO de réception 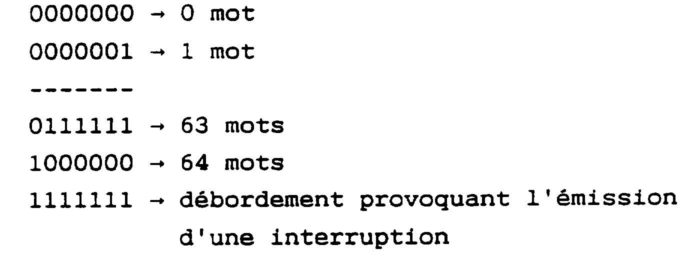
- les bits 8 à 3 définissent le nombre de mots ARINC stockés dans la pile FIFO d'émission : 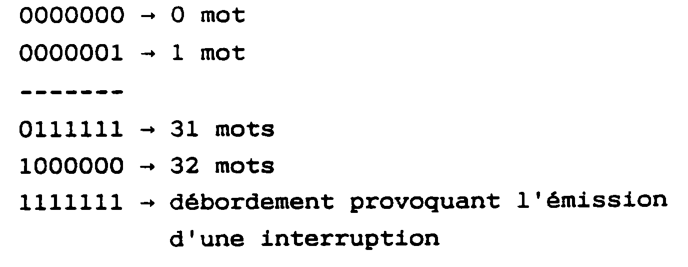
- le bit 2 indique une interruption à la suite de la réception d'un mot dont le "label" contient un indicateur ("flag") ;
- le bit 1 indique une interruption provoquée à la suite d'une anomalie en réception, sur l'une des voies ;
- le bit 0 indique une interruption provoquée à la suite d'une anomalie en réception, sur l'autre voie.

Les échanges entre le processeur de l'unité locale, qui sera désignée ci-après CPU, et l'interface, s'effectuent conformément à un protocole défini par les éléments de programmation suivants :

### LECTURE DE LA RAM DE PIEGES A "LABELS" PAR LA CPU

La CPU lit un port de l'interface
Déclencher un accès à la RAM de pièges à "labels" (RAMCPUP)
Lire en RAM le piège à "labels" présent à l'adresse PTRLAB (pointeur de pièges à "labels")
Restituer ce piège à "labels" à la CPU
Incrémenter le pointeur de piège à "labels" PTRLAB
Emettre le signal d'acquittement à la CPU
Quitter l'accès RAMCPUP

### ECRITURE DANS LA RAM DE PIEGES A "LABELS" PAR LA CPU

La CPU écrit dans un port de l'interface
Déclencher un accès de l'unité locale à la RAM de pièges à "labels" (RAMCPUP)
Ecrire en RAM à l'adresse PTRLAB le piège à "labels" émis par la CPU
Incrémenter le pointeur de piège à "labels" PTRLAB
Emettre le signal d'acquittement à la CPU
Quitter l'accès RAMCPUP

### LECTURE DE LA RAM DE RECEPTION PAR LA CPU

La CPU lit le port H/L de l'interface
Déclencher un accès RAMCPUR (de la RAM de réception par l'unité locale)
"Case" (poids présent) de
   - L :: "Case" (poids précédent) de
   H : Si ("Flag" FIFOVIDER actif)
   Alors Restituer le code spécial de fifo vide à la CPU
   Sinon Lire en RAM les poids L du mot présent à l'adresse PTRLECR-0
      Restituer ce 1/2 mot à la CPU
   Finsi
   Poids précédent = L
   Mémoriser le "flag" FIFOVIDER
   Emettre le signal d'acquittement à la CPU

   L : NOP Fincase
   - H :: "Case" (poids précédent) de
   H : NOP
   L : Si ("Flag" FIFOVIDER actif)
   Alors Restituer le code de fifo vide à la CPU
   Sinon Lire en RAM les poids H du mot présent à
   l'adresse PTRLECR-1
      Restituer ce 1/2 mot à la CPU
      Incrémenter le pointeur de lecture PTRLECR
      Si (PTRLECR = PTRECRR)
      Alors Activer le "flag" FIFOVIDER
      Finsi
      Finsi
   Poids précédent = H
   Libérer le "flag" FIFOVIDER
   Emettre le signal d'acquittement à la CPU
   Fincase Fincase
Quitter l'accès RAMCPUR

### ECRITURE DANS LA RAM DE RECEPTION PAR LA CPU

La CPU écrit dans le port H/L de l'interface
Déclencher un accès CPURAMR
"Case" (poids présent) de
   - L :: "Case" (poids précédent) de
   H : Si ("Flag" FIFOPLEINR non actif)
   Alors Ecrire en RAM à l'adresse PTRECRR-O le 1/2 mot L émis par la CPU
   Finsi
   Poids précédent = L
   Mémoriser le "flag" FIFOPLEINR
   Emettre le signal d'acquittement à la CPU

   L : NOP Fincase
   - H :: "Case" (poids précédent) de
   H : NOP
   L : Si ("Flag" FIFOPLEINR non actif)
   Alors Ecrire en RAM à l'adresse PTRECRR-1 le 1/2 mot H émis par la CPU
      Incrémenter le pointeur d'écriture PTRECRR Si (PTRECRR = PTRLECR)
      Alors Activer le "flag" FIFOPLEINR
      Finsi
   Sinon "Overflow" de la fifo de réception
   Finsi
   Poids précédent = H
   Libérer le "flag" FIFOPLEINR
   Emettre le signal d'acquittement à la CPU
   Fincase Fincase
   Quitter l'accès CPURAMR

### LECTURE DE LA RAM D'EMISSION PAR LA CPU

La CPU lit le port H/L de la voie X de l'interface (x = 0/1)
Déclencher un accès RAMCPUT
"Case" (poids présent) de
   - L :: "Case" (poids précédent sur la voie X) de
   H : Si ("Flag" FIFOVIDEXT de la voie X actif)
   Alors Restituer le code spécial de fifo vide à la CPU
   Sinon Rechercher la 1ère case occupée dans le descripteur de la voie X,
      à partir de l'ancien pointeur de lecture PTRLECXT de la voie X
   Stocker son adresse dans le pointeur de lecture PTRLECXT de la voie X
      Lire en RAM les poids L du mot présent à l'adresse PTRLECXT-0
      Restituer ce 1/2 mot à la CPU
   Finsi
   Poids précédent sur la voie X = L
   Mémoriser le "flag" FIFOVIDEXT de la voie X
   Emettre le signal d'acquittement à la CPU

   L : NOP Fincase
   - H :: "Case" (poids précédent sur la voie X) de
   H : NOP
   L : Si ("Flag" FIFOVIDEXT de la voie X actif)
   Alors Restituer le code spécial de fifo vide à la CPU
   Sinon Lire en RAM les poids H du mot présent à l'adresse PTRLECXT-1
      Restituer ce 1/2 mot à la CPU
      Désactiver le bit no PTRLECXT dans le descripteur de la voie X
      Si (Descripteur de la voie X vide)
      Alors Activer le "flag" FIFOVIDEXT de la voie X
      Finsi Décrémenter le compteur de mots en attente dans
      la RAM d'émission
   Finsi
   Poids précédent sur la voie X = H
   Libérer le "flag" FIFOVIDEXT de la voie X
      Emettre le signal d'acquittement à la CPU
   Fincase
   Fincase
   Quitter l'accès RAMCPUT

### ECRITURE DANS LA RAM D'EMISSION PAR LA CPU

La CPU écrit dans le port H/L de la voie X de l'interface (X = 0/1)
Déclencher un accès CPURAMT
"Case" (poids présent) de
   - L :: "Case" (poids précédent) de
   H : Si ("Flag" FIFOPLEINT non actif)
   Alors Rechercher la 1ère case inoccupée dans les descripteurs des 2 voies,
      à partir de l'ancien pointeur d'écriture PTRECRT
   Stocker son adresse dans le pointeur d'écriture PTRECRT
   Ecrire en RAM à l'adresse PTRECRT-0 le 1/2 mot émis par la CPU
   Finsi
   Accès précédent = L
   Voie précédente = X
   Mémoriser le "flag" FIFOPLEINT
   Emettre le signal d'acquittement à la CPU
   - L :: NOP
   Fincase
   - H :: "Case" (poids précédent.voie précédente) de
   H : NOP
   L./X : NOP
   L.X : Si ("Flag" FIFOPLEINT non actif)
   Alors Ecrire en RAM à l'adresse PTRECRT-1 le 1/2 mot émis par la CPU
      Activer le bit no PTRECRT dans le descripteur de la voie X
      Incrémenter le compteur de mots en attente dans la RAM d'émission
         Si (Compteur saturé)
         Alors activer le "flag" FIFOPLEINT
         Finsi
   Sinon "Overflow" de la fifo d'émission
   Finsi
   Accès précédent = H
   Libérer le "flag" FIFOPLEINT
   Emettre le signal d'acquittement à la CPU
Fincase
Fincase
Quitter l'accès CPURAMT

## Revendications

1. Procédé de contrôle du gabarit d'informations numériques transmises à un dispositif de réception, sous la forme d'une succession de mots indépendants de structure identique,
caractérisé en ce qu'il comprend une étape de codage préalable d'un nombre déterminé de gabarits possibles définis par des contraintes portant sur un ensemble limité de paramètres comprenant :
- les temps minima et maxima associés à la transmission d'un bit d'information,
- le rapport cyclique de la modulation,
- l'intervalle de temps "Gap" entre deux mots,
- le nombre de bits par mot, et
- la parité du mot ;
ledit procédé comprenant, lors de la réception de chacun des mots :
. une première étape de détection des susdits paramètres dans le mot en cours de réception, et de détermination, parmi les gabarits mémorisés, de celui qui correspond aux paramètres détectés ;
. une deuxième étape de vérification de la conformité du mot reçu avec le gabarit déterminé ; et
. le retour à la première étape dans le cas où cette vérification révèle une non conformité entre le gabarit détecté et le mot en cours de réception.

2. Procédé selon la revendication 1, caractérisé en ce que, dans le cas où elle aboutit, la phase de détection se termine dès la détermination d'un gabarit, et en ce que le critère pour la détermination du gabarit est la satisfaction de la contrainte portant sur le temps de transmission d'un bit appliqué à transmission du premier bit du mot.

3. Procédé selon la revendication 1 ou 2, caractérisé en ce qu'il comprend en outre le rejet des informations qui, durant toute leur transmission, n'ont pas satisfait à toutes les contraintes d'un même et unique gabarit, parmi tous les gabarits possibles.

4. Procédé selon l'une des revendications précédentes,
caractérisé en ce qu'il comprend en outre une séquence de tri portant sur un critère de sélection qui fait partie intégrante de l'information transmise et qui, de préférence, se trouve en tête de celle-ci, cette séquence de tri pouvant comprendre :
- la scrutation cyclique, à fréquence fixe, d'une liste de conditions programmées et mises en mémoire ;
- l'acquisition de l'information transmise sur la ligne ;
- l'activation d'un processus de sélection lorsque le critère de sélection de l'information a été acquis, ce processus de sélection comportant une étape de synchronisation d'attente du passage du processus de scrutation par la position de début de la liste de conditions, et une séquence de comparaison de l'information de sélection contenue dans l'information en cours de réception, et l'élaboration d'une variable de sélection qui indique si le message en cours de réception intéresse ou non le récepteur, la fin du processus de sélection étant obtenue soit par l'épuisement de toutes les conditions de la liste et le retour vers la condition de début de liste, soit par la lecture d'un code spécial dit code de fin de liste ;
- la mémorisation des informations sélectionnées dans une mémoire tampon accessible par le système hôte.

5. Procédé selon l'une des revendications précédentes,
caractérisé en ce que les informations numériques sont engendrées par des modulateurs différentiels et sont transmises par des voies bifilaires de façon asynchrone, et en ce que le contrôle du gabarit de ces informations est effectué sur l'enveloppe de la modulation.

6. Procédé selon la revendication 5,
caractérisé en ce qu'il comprend :
- l'échantillonnage de l'enveloppe,
- le comptage des échantillons compris dans un bit (temps bit), et
- le comptage des bits constituant un mot ;
et en ce qu'au cours de la réception d'un mot, à chaque échantillon, il comprend l'établissement d'un "contexte" comportant :
- la valeur de l'échantillon précédent, préalablement mémorisé,
- le relevé du comptage par un compteur du temps bit (26),
- le relevé du comptage par un compteur de bits (27),
- le code du gabarit détecté,
- la parité courante, et
- une information de détection du "Gap".

7. Procédé selon la revendication 6, caractérisé en ce qu'à la suite d'une initialisation, à chaque échantillon, le contexte ne peut évoluer que selon un événement de type front "montant", cet événement provoquant une incrémentation du comptage des bits, une remise à zéro du comptage des échantillons et la mise à jour de la parité courante, aucune action n'étant provoquée dans le cas où il ne se produit pas d'événement ou si l'événement est de type front "descendant".

8. Procédé selon l'une des revendications 6 et 7, caractérisé en ce que, dans le cas où le compteur de bits (27) est à 1, en l'absence d'un événement de type front montant, chaque échantillon provoque une incrémentation du compteur de temps bits, et en ce que dans le cas où il se produit un événement de type front montant, cet événement provoque :
- la détection du code gabarit à partir du compteur de temps bit (26) et la mémorisation de ce code,
- l'incrémentation du compteur de bits (27),
- la remise à zéro du compteur de temps bit (26), et
- la mise à jour de la parité.

9. Procédé selon l'une des revendications 6 à 8, caractérisé en ce que dans le cas où le compteur de bits (27) relève un chiffre compris entre 1 et la valeur du nombre de bits attendus pour un mot exclus, chaque échantillon provoque une incrémentation du compteur de temps bit (26) sauf dans le cas d'un événement de type front montant, en ce qu'un événement de type front descendant provoque alors la vérification de la valeur courante du compteur de temps bit (26) par rapport aux limites de la durée de la partie active du bit, et l'émission d'un signal d'erreur si la valeur courante est en dehors des limites, et en ce que, dans le cas où survient un événement de type front montant, cet événement provoque :
- une incrémentation du compteur de bits (27),
- une vérification de la valeur courante du compteur de temps bit (26) par rapport aux limites et l'émission d'un signal d'erreur si la valeur courante est en dehors des limites,
- une remise à zéro du compteur de temps bit (26), et
- une mise à jour de la parité.

10. Procédé selon l'une des revendications 6 à 9, caractérisé en ce, que dans le cas où le compteur de bits (27) relève un chiffre correspondant à la valeur du nombre de bits attendus pour un mot, tous les événements sauf "front montant" provoquent :
- une vérification de la parité et l'émission d'un signal d'erreur si la parité est incorrecte,
- une attente de la valeur prévue pour la valeur de "Gap" minimum, en fonction du type de gabarit détecté et l'émission d'un signal fin de mot correct si le compteur de temps bit (26) relève une valeur égale à la valeur de "Gap" minimum, et
- une incrémentation du compteur de temps bit (26); et en ce que, dans le cas où il se produit un événement de type "front descendant", cet événement provoquera en outre la vérification de la valeur courante du compteur de temps bit (26) par rapport aux limites minimum et maximum de la durée de la partie active et l'émission d'un signal d'erreur si la valeur courante est en dehors des limites.

11. Procédé selon l'une des revendications 6 à 10, caractérisé en ce que le signal d'erreur provoque :
- la mise à jour d'un vecteur d'erreur,
- la remise à zéro du compteur de bits (27),
- la remise à zéro du compteur de temps bit (26), et
- la remise à zéro de la parité.

12. Procédé selon l'une des revendications 6 à 11, caractérisé en ce que le signal fin de mot correct provoque :
- la remise à zéro du compteur de bits (27),
- la remise à zéro du compteur de temps bit (26),
- la remise à zéro de la parité, et
- la transmission aux dispositifs situés en aval d'un signal indiquant qu'un mot correct est disponible.

13. Dispositif pour la mise en oeuvre du procédé selon l'une des revendications précédentes, caractérisé en ce qu'il se présente sous la forme d'une unité d'interface d'entrée/sortie (1) connectée, d'une part, à un processeur local (P) et, d'autre part, à au moins une voie de réception d'informations (5,6) par l'intermédiaire d'un démodulateur (7), l'unité d'interface (1) comprenant, connectés par un bus interne (11) :
- un bloc de réception (14) connecté au démodulateur (7), et comprenant une mémoire tampon (15) permettant d'accumuler les bits constituant les mots reçus par la voie de réception, et un dispositif de contrôle de gabarit conçu pour contrôler le gabarit des mots stockés dans la mémoire tampon (15) ;
- un interface de liaison (16) avec le processeur local (P) ;
- une mémoire vive (RAM₂) associée à un circuit de gestion des données (17) destinée à recevoir les mots reçus après contrôle par le dispositif de contrôle de gabarit ; et
- un automate (19) servant à piloter un générateur d'adresse (20) associé à la mémoire (RAM₂) par l'intermédiaire d'un pointeur de réception (22), d'un pointeur d'émission (21), et d'un pointeur de liste des conditions (23).

14. Dispositif selon la revendication 13, caractérisé en ce que le dispositif de contrôle de gabarit comprend :
- un circuit logique OU permettant d'obtenir l'enveloppe de la modulation des signaux émis sur les deux fils de transmission (5,6),
- un échantillonneur (E) qui procède à l'échantillonnage de l'enveloppe,
- un compteur de temps bit (26) d'une capacité au moins égale au nombre maximum d'échantillons susceptibles d'être dénombrés entre le front montant du dernier bit d'un mot transmis à la vitesse correspondant au gabarit le plus lent et l'instant au bout duquel un "Gap" minimum s'est écoulé,
- un compteur de bits (27) d'une capacité au moins égale à la longueur du mot, ce compteur effectuant par exemple le comptage des fronts (montant ou descendant) de l'enveloppe, depuis le début d'un mot,
- un registre (28) pour la mémorisation du susdit échantillon précédent permettant la détection de fronts,
- un registre (29) pour le stockage de l'ensemble des codes de gabarit susceptibles d'être reçus,
- un registre (30) de 1 bit contenant la parité du mot reçu, et
- un circuit de logique combinatoire (25) permettant la détection du gabarit et la vérification de ce dernier, notamment à l'aide des compteurs de temps bit (26) et de bits (27) et des registres (29,30), ce circuit comprenant un détecteur pour la détection du code du gabarit et un registre pour contenir l'information "Gap détecté" fournie par un détecteur de "Gap".

15. Dispositif selon la revendication 14, caractérisé en ce que dans le cas où il constitue un interface entre un processeur P et n voies de transmission, le dispositif de contrôle de gabarit comprend un multiplexeur (MUX₁) piloté par un séquenceur (SEQ), et permettant de connecter séquentiellement ces n voies de transmission à l'entrée de l'échantillonneur (E), le dispositif de contrôle de gabarit faisant en outre intervenir cinq ensembles de registres, à savoir :
- un premier ensemble de n compteurs de temps bit (26 R₁, 26 R₂, 26 Rₙ),
- un second ensemble de n compteurs de bits (27 R₁, 27 R₂, 27 Rₙ),
- un troisième ensemble de n registres de mémorisation de la valeur de l'échantillon précédent (28 R₁, 28 R₂, 28 Rₙ),
- un quatrième ensemble de n registres de stockage du code gabarit (29 R₁, 29 R₂, 29 Rₙ), et
- un cinquième ensemble de n registres de parité courante (30 R₁, 30 R₂, 30 Rₙ),
et en ce que chacun de ces cinq ensembles est connecté au circuit de logique combinatoire (25) par l'intermédiaire d'un multiplexeur respectif (MUX₂) à (MUX₆), piloté par le séquenceur (SEQ) en synchronisme avec le multiplexeur (MUX₁).

16. Dispositif selon la revendication 15, caractérisé en ce que les susdits multiplexeurs (MUX₁ à MUX₆) font partie d'un même système de multiplexage.

## Patentansprüche

1. Verfahren zur Kontrolle der Form digitaler Informationen, die in Form einer Folge von unabhängigen Wörtern identischer Struktur zu einer Empfangsvorrichtung übertragen werden, dadurch gekennzeichnet, daß es einen Schritt der vorhergehenden Kodierung einer bestimmten Anzahl von möglichen Formen aufweist, die durch Zwänge definiert werden, welche sich auf eine begrenzte Anzahl von Parametern beziehen, die enthalten:
- die der Übertragung eines Informationsbits zugeordneten minimalen und maximalen Zeiten,
- das zyklische Verhältnis der Modulation,
- das Zeitintervall "Gap" zwischen zwei Wörtern,
- die Anzahl von Bits je Wort,
- und die Parität des Worts,
wobei das Verfahren beim Empfang jedes der Wörter aufweist:
. einen ersten Schritt der Erfassung der Parameter im gerade empfangenen Wort und der Bestimmung derjenigen unter den gespeicherten Formen, die den erfaßten Parametern entspricht,
. einen zweiten Schritt der Überprüfung der Übereinstimmung des empfangenen Worts mit der bestimmten Form, und
. die Rückkehr zum ersten Schritt, falls diese Überprüfung eine fehlende Übereinstimmung zwischen der erfaßten Form und dem gerade empfangenen Wort ergibt.

2. Verfahren nach Anspruch 1, dadurch gekennzeichnet, daß die Erfassungsphase, wenn sie erfolgreich ist, bei Bestimmung einer Form endet, und daß das Kriterium für die Bestimmung der Form die Erfüllung des sich auf die Übertragungszeit eines Bits beziehenden Zwangs ist, angewandt auf die Übertragung des ersten Bits des Worts.

3. Verfahren nach Anspruch 1 oder 2, dadurch gekennzeichnet, daß es weiter die Zurückweisung der Informationen enthält, die während ihrer ganzen Übertragung nicht alle Zwänge einer einzigen Form unter allen möglichen Formen erfüllt haben.

4. Verfahren nach einem der vorhergehenden Ansprüche, dadurch gekennzeichnet, daß es weiter eine Sortierfolge enthält, die sich auf ein Auswahlkriterium bezieht, das integraler Teil der übertragenen Information ist und das sich vorzugsweise an deren Anfang befindet, wobei diese Sortierfolge aufweisen kann:
- die zyklische Abfrage bei fester Frequenz einer Liste von programmierten und gespeicherten Bedingungen;
- die Erfassung der auf der Leitung übertragenen Information,
- die Aktivierung eines Auswahlprozesses, wenn das Auswahlkriterium der Information erfaßt wurde, wobei dieser Auswahlprozeß einen Schritt der Synchronisierung der Erwartung des Durchlaufs des Abfrageprozesses durch die Anfangsposition der Liste von Bedingungen und eine Vergleichsfolge der Auswahlinformation enthält, die in der gerade empfangenen Information enthalten ist, und die Ausarbeitung einer Auswahlvariablen, die angibt, ob die gerade empfangene Nachricht den Empfänger interessiert oder nicht, wobei das Ende des Auswahlprozesses entweder durch Erschöpfung aller Bedingungen der Liste und die Rückkehr zur Anfangsbedingung der Liste oder durch das Lesen eines Listenendekode genannten speziellen Kodes erhalten wird;
- die Speicherung der ausgewählten Informationen in einem Pufferspeicher, der für das Wirtsystem zugänglich ist.

5. Verfahren nach einem der vorhergehenden Ansprüche, dadurch gekennzeichnet, daß die digitalen Informationen von Differentialmodulatoren erzeugt und in asynchroner Weise über zweidrähtige Kanäle übertragen werden, und daß die Kontrolle der Form dieser Informationen auf der Einhüllenden der Modulation durchgeführt wird.

6. Verfahren nach Anspruch 5, dadurch gekennzeichnet, daß es aufweist:
- das Abtasten der Einhüllenden,
- das Zählen der Tastproben, die in einem Bit enthalten sind (Bitzeit) und
- das Zählen der ein Wort bildenden Bits,
und daß es während des Empfangs eines Worts bei jeder Tastprobe die Erstellung eines "Kontexts" enthält, der aufweist:
- den Wert der vorhergehenden Tastprobe, die vorher gespeichert wurde,
- die Ablesung der-Zählung durch einen Bitzeitzähler (26),
- die Ablesung der Zählung durch einen Bitzähler (27),
- den Kode der erfaßten Form,
- die laufende Parität und
- eine Information der Erfassung des "Gap".

7. Verfahren nach Anspruch 6, dadurch gekennzeichnet, daß nach einer Initialisierung bei jeder Tastprobe der Kontext sich nur gemäß einem Ereignis der Art "ansteigende" Flanke entwickeln kann, wobei dieses Ereignis eine Inkrementierung der Zählung der Bits, eine Nullrücksetzung der Zählung der Tastproben und die Aktualisierung der laufenden Parität bewirkt, wobei keinerlei Aktion erzeugt wird, wenn kein Ereignis stattfindet oder wenn das Ereignis der Art "abfallende" Flanke ist.

8. Verfahren nach einem der Ansprüche 6 und 7, dadurch gekennzeichnet, daß, wenn der Bitzähler (27) auf "1" ist, in Abwesenheit eines Ereignisses der Art ansteigende Flanke, jede Tastprobe eine Inkrementierung des Bitzeitzählers hervorruft, und daß, wenn ein Ereignis der Art ansteigende Flanke auftritt, dieses Ereignis bewirkt:
- die Erfassung des Formkodes ausgehend vom Bitzeitzähler (26) und die Speicherung dieses Kodes,
- die Inkrementierung des Bitzählers (27),
- die Nullrücksetzung des Bitzeitzählers (26), und
- die Aktualisierung der Parität.

9. Verfahren nach einem der Ansprüche 6 bis 8, dadurch gekennzeichnet, daß, wenn der Bitzähler (27) eine Zahl zwischen 1 und dem Wert der für ein Wort erwarteten Anzahl von ausgeschlossenen Bits aufzeigt, jede Tastprobe eine Inkrementierung des Bitzeitzählers (26) bewirkt, außer im Fall eines Ereignisses mit ansteigender Flanke, daß ein Ereignis mit abfallender Flanke dann.die Überprüfung des laufenden Werts des Bitzeitzählers (26) in Bezug auf die Grenzen der Dauer des aktiven Teils des Bits und die Aussendung eines Fehlersignals bewirkt, wenn der laufende Wert sich außerhalb dieser Grenzen befindet, und daß, wenn ein Ereignis mit ansteigender Flanke auftritt, dieses Ereignis hervorruft:
- eine Inkrementierung.des Bitzählers (27),
- eine Überprüfung des laufenden Werts des Bitzeitzählers (26) in Bezug auf die Grenzen und die Aussendung eines Fehlersignals, wenn der laufende Wert sich außerhalb der Grenzen befindet,
- eine Nullrückstellung des Bitzeitzählers (26) und
- eine Aktualisierung der Parität.

10. Verfahren nach einem der Ansprüche 6 bis 9, dadurch gekennzeichnet, daß, wenn der Bitzähler (27) eine Zahl entsprechend dem Wert der für ein Wort erwarteten Anzahl von Bits aufzeigt, alle Ereignisse abgesehen von denen mit ansteigender Flanke hervorrufen:
- eine Überprüfung der Perität und die Aussendung eines Fehlersignals, wen die Parität unrichtig ist,
- ein Abwarten des für den minimalen Wert von "Gap" vorgesehen Werts in Abhängigkeit von der erfaßten Art der Form und die Aussendung eines Signals Ende des Worts korrekt, wenn der Bitzeitzähler (26) einen Wert gleich dem minimalen Wert des "Gap" aufzeigt, und
- eine Inkrementierung des Bitzeitzählers (26), und daß, wenn ein Ereignis der Art "abfallende Flanke" auftritt, dieses Ereignis außerdem die Überprüfung des laufenden Werts des Bitzeitzählers (26) in Bezug auf die minimalen und maximalen Grenzen der Dauer des aktiven Teils und die Aussendung eines Fehlersignals bewirkt, wenn der laufende Wert außerhalb der Grenzen liegt.

11. Verfahren nach einem der Ansprüche 6 bis 10, dadurch gekennzeichnet, daß das Fehlersignal bewirkt:
- die Aktualisierung eines Fehlervektors,
- die Nullrücksetzung des Bitzählers (27),
- die Nullrücksetzung.des Bitzeitzählers (26) und
- die Nullrücksetzung der Parität.

12. Verfahren nach einem der Ansprüche 6 bis 11, dadurch gekennzeichnet, daß das Signal "Ende des Wortes korrekt" hervorruft:
- die Nullrücksetzung des Bitzählers (27),
- die Nullrücksetzung des Bitzeitzählers (26),
- die Nullrücksetzung der Parität und
- die Übertragung eines Signals, das angibt, daß ein korrektes Wort verfügbar ist, zu den stromabwärts liegenden Vorrichtungen.

13. Vorrichtung zur Anwendung des Verfahrens nach einem der vorhergehenden Ansprüche, dadurch gekennzeichnet, daß sie in Form einer Eingangs/Ausgangs-Schnittstelleneinheit (1) vorliegt, die einerseits mit einem örtlichen Prozessor (P) und andererseits mit mindestens einem Informations-Empfangskanal (5, 6) über einen Demodulator (7) verbunden ist, wobei die Schnittstelleneinheit (1) über einen inneren Bus (11) verbunden aufweist:
- einen Empfangsblock (14), der mit dem Demodulator (7) verbunden ist und einen Pufferspeicher (15), der es ermöglicht, die Bits zu speichern, die die vom Empfangskanal erhaltenen Wörter bilden, und eine Vorrichtung zur Kontrolle der Form aufweist, die ausgebildet ist, um die Form der im Pufferspeicher (15) gespeicherten Wörter zu kontrollieren,
- eine Verbindungsschnittstelle (16) mit dem örtlichen Prozessor (P),
- einen Lebendspeicher (RAM₂), der einer Datenverwaltungsschaltung (17) zugeordnet ist und der die empfangenen Wörter nach der Kontrolle durch die Vorrichtung zur Kontrolle der Form empfangen soll,
- und einen Automaten (19), der einen dem Speicher (RAM₂) zugeordneten Adressengenerator (20) über einen Empfangszeiger (22), einen Sendezeiger (21) und einen Bedingungslistenzeiger (23) steuert.

14. Vorrichtung nach Anspruch 13, dadurch gekennzeichnet, daß die Vorrichtung zur Kontrolle der Form aufweist:
- eine logische ODER-Schaltung, die es ermöglicht, die Einhüllende der Modulation der auf den beiden Übertragungsdrähten (5, 6) ausgesendeten Signale zu erhalten,
- einen Tastprobennehmer (E), der die Einhüllende abtastet,
- einen Bitzeitzähler (26) einer Kapazität mindestens gleich der maximalen Anzahl von Tastproben, die zwischen der ansteigenden Flanke des letzten Bits eines Worts, das mit der der langsamsten Form entsprechenden Geschwindigkeit übertragen wurde, und dem Zeitpunkt aufgezählt werden können, an dessen Ende ein minimaler "Gap" abgelaufen ist,
- einen Bitzähler (27) einer Kapazität mindestens gleich der Länge des Worts, wobei dieser Zähler zum Beispiel die Zählung der Flanken (ansteigend oder abfallend) der Einhüllenden vom Anfang eines Wortes an.durchführt,
- ein Register (28) für die Speicherung der vorhergehenden Tastprobe, die die Erfassung von Flanken erlaubt,
- ein Register (29) für die Speicherung der Gesamtheit der Formkodes, die empfangen werden können,
- ein Register (30) mit 1 Bit, das die Parität des empfangenen Worts enthält, und
- eine kombinatorische Logikschaltung (25), die die Erfassung der Form und deren Überprüfung erlaubt, insbesondere mit Hilfe des Bitzeitzählers (26) und des Bitzählers (27) und der Register (29, 30), wobei diese Schaltung einen Detektor für die Erfassung des Formkodes und ein Register enthält, das die Information "Gap erfaßt" enthält, die von einem "Gap"-Detektor geliefert wird.

15. Vorrichtung nach Anspruch 14, dadurch gekennzeichnet, daß, wenn sie eine Schnittstelle zwischen einem Prozessor P und n Übertragungskanälen bildet,die Vorrichtung zur Kontrolle der Form einen Multiplexer (MUX₁) aufweist, der von einem Folgeschalter (SEQ) gesteuert wird rund es ermöglicht, diese n Übertragungskanäle sequentiell mit dem Eingang des Tastprobennehmers (E) zu verbinden, wobei die Vorrichtung zur Kontrolle der Form außerdem fünf Registereinheiten verwendet, d.h.:
- eine erste Einheit von n Bitzeitzählern (26 R₁, 26 R₂, 26 Rₙ),
- eine zweite Einheit von n Bitzählern (27 R₁, 27 R₂, 27 Rₙ),
- eine dritte Einheit von n Registern zur Speicherung des Werts der vorhergehenden Tastprobe (28 R₁, 28 R₂, 28 Rₙ),
- eine vierte Einheit von n Speicherregistern für den Formkode (29 R₁, 29 R₂, 29 Rₙ),
- eine fünfte Einheit von n Registern laufender Parität (30 R₁, 30 R₂, 30 Rₙ),
und daß jede dieser fünf Einheiten mit der kombinatorischen Logikschaltung (25) über je einen Multiplexer (MUX₂) bis (MUX₆) verbunden ist, der vom Folgeschalter (SEQ) synchron mit dem Multiplexer (MUX₁) gesteuert wird.

16. Vorrichtung nach Anspruch 15, dadurch gekennzeichnet, daß die Multiplexer (MUX₁ bis MUX₆) Teil des gleichen Multiplexiersystems sind.

## Claims

1. Method of checking the template of digital messages transmitted to a receiver device in the form of a succession of independent words of identical structure, characterized in that it comprises a step of coding beforehand a particular number of possible templates defined by constraints directed to a limited number of parameters comprising :
- the minimum and maximum times associated with the transmission of an information bit,
- the "Gap" time interval between two words,
- the duty factor of the modulation,
- the number of bits per word, and
- the parity of the word,
said method comprising, on reception of each of the words :
. a first step of detecting said parameters in the word being received and determining which of the memorized templates matches the detected parameters,
. a second step of checking that the word received conforms to the determined template, and
. returning to the first step if said checking indicates that the word being received does not conform to the detected template.

2. Method according to claim 1,
characterized in that, if it succeeds, the detection phase ends as soon as a template is determined, and in that the criterion for determining the template is that the constraint concerning the bit transmission time applied to transmitting the first bit of the word is satisfied.

3. Method according to claim 1 or 2,
characterized in that it further comprises the rejection of information which throughout its transmission has not satisfied all the constraints of a single template from all possible templates.

4. Method according to one of the preceding claims, characterized in that it further comprises a sorting sequence based on a selection criterion which is an integral part of the information transmitted and is preferably located at the start of the information transmitted, said sorting sequence possibly comprising :
- cyclical scanning at a fixed frequency of a list of conditions which are programmed and stored in memory,
- acquisition of information transmitted on the line,
- activation of a selection process each time that the information selection criterion has been acquired, the selection process including a synchronization stage which waits for the scanning process to cross the start of said list of conditions, a comparison sequence on the selection information contained in the information being received, and the production of a selection variable which indicates if the message being received is of interest to the receiver or not, the selection process ending either when all the conditions from said list have been exhausted and on returning to the start of list condition or upon reading a special end of list code,
- memorization of the information selected in a buffer accessible to the host unit.

5. Method according to one of the preceding claims, characterized in that the digital information is generated by differential modulators and is sent asynchronously over two-wire channels, and in that the information template is checked by means of the modulation envelope.

6. Method according to claim 5,
characterized in that it comprises :
- sampling the envelope,
- counting the samples contained in a bit (bit time), and
- counting the bits constituting a word, and in that during the reception of a word a "context" is established for each sample comprising :
- the value of the previous sample, previously memorized,
- the reading of a bit time counter (26),
- the reading of a bit counter (27),
- the detected template code,
- the current parity, and
- a "Gap detected" indication.

7. Method according to claim 6,
characterized in that after resetting for each sample the context can evolve only on a "rising edge" type event which brings about incrementing of the bit counter, resetting of the sample counter and updating of the current parity, no action following a "falling edge" type event or no event.

8. Method according to one of claims 6 and 7,
characterized in that, if said bit counter (27) is at 1 and in the absence of a "rising edge" type event, each sample causes the bit time counter to be incremented, and in that, if a "rising edge" type event occurs it brings about :
- detection of the template code from the bit time counter (26) and storage of said code in memory,
- incrementing of said bit counter (27),
- resetting of said bit time counter (26), and
- updating of the parity.

9. Method according to one of claims 6 to 8,
characterized in that, if said bit counter (27) indicates a digit between 1 and the value of the number of bits expected for a word exclusive, each sample causes incrementing of the bit time counter (26) except in the case of a "rising edge" type event, and in that a "falling edge" type event causes checking of the current value of the bit time counter (26) against the limits of the bit active part duration and the generation of an error signal if the current value is outside the limits, and in that, if a "rising edge" type event occurs, it brings about :
- incrementing of said bit counter (27),
- checking of the current value of said bit time counter (26) against the limits and sending of an error signal if said current value is outside said limits,
- resetting of said bit time counter (26), and
- updating of the parity.

10. Method according to one of claims 6 to 9,
characterized in that, if said bit counter (27) indicates a digit representing the value of the number of bits expected for a word, all events except "rising edge" type events bring about :
- checking of the parity and sending of an error signal if the parity is incorrect,
- a wait for the expected "Gap" minimum value appropriate to the template type detected and the sending of a correct end of word signal if said bit time counter (26) indicates a value equal to the minimum "Gap" value, and
- incrementing of said bit time counter (26),
and in that a "falling edge" type of event further causes checking of the current value of said bit time counter (26) against the minimum and maximum limits of the active part duration and the production of an error signal if said current value is outside said limits.

11. Method according to one of claims 6 to 10, characterized in that said error signal causes :
- updating of an error vector,
- resetting of said bit counter (27),
- resetting of said bit time counter (26), and
- resetting of the parity.

12. Method according to one of claims 6 to 11, characterized in that said correct end of word signal brings about :
- resetting of said bit counter (27),
- resetting of said bit time counter (26),
- resetting of the parity, and
- sending to the devices on the output side of a signal indicating that a correct word is available.

13. Device for implementing the method according to one of the preceding claims,
characterized in that it is in the form of an input/output interface unit (1) connected to a local processor (P) and to at least one information receive channel (5, 6) via a demodulator (7), said interface unit (1) comprising, connected by an internal bus (11) :
- a receive unit (14) connected to the demodulator (7) and comprising a buffer memory (15) for accumulating the bits constituting the words received by the reception channel and a template checking device for checking the template of the words stored in the buffer memory (15),
- an interface (16) to said local unit (P),
- a first random access memory (RAM₂) associated with a data management circuit (17) for receiving the words received after checking by the template checking device, and
- a control unit (19) driving an address generator (20) associated with said random access memory (RAM₂) through a receive pointer (22), a send pointer (21) and a condition list pointer (23).

14. Device according to claim 13,
characterized in that said template checking device comprises :
- an OR logic circuit adapted to produce the envelope of the modulation of the signals sent on the two send wires (5, 6),
- a sampler (E) adapted to sample said envelope,
- a bit time counter (26) having a capacity at least equal to the maximum number of samples likely to be counted between the rising edge of the last bit of one word transmitted at the speed representing the slowest template and the time at the end of which a miminum "Gap" has elapsed,
- a bit counter (27) having a capacity at least equal to the word length and adapted to count, for example, rising or falling edges of the envelope from the start of a word,
- a register (28) for storing said previous sample, allowing detection of the edges,
- a register (29) for storing all template codes likely to be received,
- a 1-bit register (30) containing the parity of the word received, and
- a combinatorial logic circuit (25) for detecting the template and checking same, in particular by using the bit time (26) and bit (27) counters and registers (29, 30), said circuit comprising a detector for detecting the template code and a register for containing the "Gap detected" information supplied by a "Gap" detector.

15. Device according to claim 14,
characterized in that if it constitutes an interface between a processor (P) and n transmission channels the template checking device comprises a multiplexer (MUX₁) driven by a sequencer (SEQ) sequentially connecting these n transmission channels to the input of said sampler (E), the template checking device further using five sets of registers, namely :
- a first set of n bit time counters (26R₁, 26R₂, 26Rₙ),
- a second set of n bit counters (27R₁, 27R₂, 27Rₙ),
- a third set of n registers for storing the value of the previous sample (28R₁, 28R₂, 28Rₙ),
- a fourth set of n registers for storing the template code (29R₁, 29R₂, 29Rₙ),
- a fifth set of n current parity registers (30R₁, 30R₂, 30Rₙ),
and in that each of said five sets is connected to said combinatorial logic circuit (25) by a respective multiplexer (MUX₂ to MUX₆) driven by said sequencer (SEQ) synchronously with said first multiplexer (MUX₁).

16. Device according to claim 15, characterized in that said multiplexers (MUX₁ to MUX₆) are part of a common multiplexing system.
